(19) Europäisches Patentamt
European Patent Office
Office européen des brevets

(11) **EP 4 528 682 A1**

(12) **EUROPÄISCHE PATENTANMELDUNG**

(43) Veröffentlichungstag:
26.03.2025 Patentblatt 2025/13

(21) Anmeldenummer: 24202323.2

(22) Anmeldetag: 24.09.2024

(51) Internationale Patentklassifikation (IPC):
*G06V 40/16* (2022.01)    *G06V 40/19* (2022.01)
*G06V 40/18* (2022.01)

(52) Gemeinsame Patentklassifikation (CPC):
**G06V 40/197; G06V 40/171; G06V 40/174;
G06V 40/19; G06V 40/193**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **25.09.2023 DE 102023125964**

(71) Anmelder: **Bundesdruckerei GmbH
10969 Berlin (DE)**

(72) Erfinder:
• **GRAUPNER, Hendrik
14050 Berlin (DE)**
• **FISCHER, Jörg
10317 Berlin (DE)**

(74) Vertreter: **Richardt Patentanwälte PartG mbB
Wilhelmstraße 7
65185 Wiesbaden (DE)**

(54) **VERFAHREN ZUM DETEKTIEREN EINER EIGENGESICHTSERKENNUNG BEI EINER PERSON, VORRICHTUNG ZUM AUTHENTIFIZIEREN EINER PERSON SOWIE EINRICHTUNG ZUM MASCHINENLERNEN**

(57) Die Erfindung geht aus von der Tatsache, dass sich an Augen einer Person auftretende Mikrosakkaden unterscheiden einerseits, wenn die Person ihr eigenes Gesichtsbild betrachtet und andererseits, wenn sie ein anderes Gesichtsbild betrachtet. Diese wird zum Detektieren der Eigengesichtserkennung genutzt, insbesondere auch zum Authentifizieren einer Person.

FIG. 5

EP 4 528 682 A1

**Beschreibung**

Die Erfindung betrifft ein Verfahren zum Detektieren einer Eigengesichtserkennung bei einer Person, insbesondere zum Zweck einer Authentifizierung dieser Person. Sie betrifft zudem eine Vorrichtung zum Authentifizieren einer Person sowie eine bei dieser Vorrichtung einsetzbare Einrichtung zum Maschinenlernen.

Das menschliche Gehirn einer Person reagiert auf das Präsentieren eines Bildes der Person selbst (Eigengesicht) anders, als wenn das Bild einer anderen Person präsentiert wird. In diesem Zusammenhang offenbart die DE 10 2020 109 284 A1 ein Authentifizierungssystem auf Basis von Hirnaktivitätssignalen, die DE 10 2020 109 285 A1 ein Authentifizierungssystem auf Basis von Fremdbildern und Bekanntbildern und entsprechenden Hirnaktivitätssignalen sowie die DE 10 2020 109 286 A1 ein Authentifizierungssystem auf Basis eines Telekommunikationsgeräts mit einem Hirnaktivitätssensor. Diese Druckschriften offenbaren des Weiteren, dass zudem anhand der Pupille eines Probanden erfasst werden kann, ob sich der Proband in einem dargestellten Gesichtsbild selbst erkennt oder jemand anderen erkennt. Die Pupille bleibt bei Eigengesichtserkennung weiter als bei Fremdgesichtserkennung.

Das Paper von Lisa Schwetlick et al. mit dem Titel "Self-recognition generates characteristic responses in pupil dynamics and microsaccade rate" befasst sich wissenschaftlich mit der Selbsterkennung.

Es ist die Aufgabe der Erfindung, die gegebenen Möglichkeiten zum Detektieren einer Eigengesichtserkennung bei einer Person zu erweitern.

Die Aufgabe wird durch ein Verfahren mit den Merkmalen gemäß Patentanspruch 1 sowie durch eine Vorrichtung mit den Merkmalen gemäß Patentanspruch 14 und eine bei der Vorrichtung nutzbare Einrichtung gemäß Patentanspruch 21 gelöst.

Vorteilhafte Ausbildungen finden sich in den Unteransprüchen.

Das erfindungsgemäße Verfahren zum Detektieren einer Eigengesichtserkennung bei einer Person, insbesondere zum Zweck einer Authentifizierung der Person, umfasst:

- Präsentieren eines ersten Gesichtsbilds gegenüber der Person;
- Erfassen von Daten zu den bei dem Betrachten des Gesichtsbilds an zumindest einem Auge der Person auftretenden Mikrosakkaden;
- Analysieren, ob die Daten zu Mikrosakkaden auf Eigengesichtserkennung durch die Person schließen lassen, und (zumindest falls ja)
- Bereitstellen einer Ausgabe eines Ergebnisses der Analyse.

Die Erfindung beruht auf der Erkenntnis, dass zum Detektieren einer Eigengesichtserkennung bei einer Person der Effekt nutzbar ist, dass die Mikrosakkaden bestimmte Charakteristika aufweisen, wenn eine Person ihr eigenes Gesicht betrachtet, die sich von entsprechenden Charakteristika unterscheiden, wenn die Person ein anderes Gesicht als ihr eigenes betrachtet. Das Verfahren endet mit dem Bereitstellen einer Ausgabe eines Ergebnisses der Analyse, so dass ein Erkenntnisgewinn betreffend die Eigengesichtserkennung gegeben ist.

Es kann vorteilhaft sein, wenn das Verfahren ebenfalls umfasst:

- Präsentieren auch zumindest eines zweiten, eine andere Person zeigenden Gesichtsbilds gegenüber der Person;
- Erfassen von Daten zu den bei dem Betrachten des zumindest einen zweiten Gesichtsbilds an zumindest einem Auge der Person auftretenden Mikrosakkaden;
- Nutzen eines Vergleichs der Daten zu Mikrosakkaden bei Betrachten des ersten Gesichtsbilds zu den Daten einerseits zu Mikrosakkaden bei Betrachten des zumindest einen zweiten Gesichtsbilds anderseits zum Detektieren der Eigengesichtserkennung.

In diesem Aspekt wird im Rahmen des Verfahrens zugleich eine Art Eichung vorgenommen. Es ist wesentlich leichter zu detektieren, dass die Mikrosakkaden auf Eigengesichtserkennung schließen lassen, wenn der Person sowohl ein Gesichtsbild von sich selbst als auch von einer anderen Person präsentiert werden.

Gemäß Ausführungsformen hierzu kann vorgesehen sein, dass zumindest eines der zweiten Gesichtsbilder eine der Person bekannte andere Person zeigt und zumindest eines der zweiten Gesichtsbilder eine der Person nicht bekannte andere Person zeigt. In diesem Fall kann die "Eichung" noch verfeinert werden, denn tatsächlich unterscheiden sich die Mikrosakkaden auch bei Betrachtung von Bildern anderer Personen, je nachdem, ob die betrachtende Person die andere Person kennt oder nicht kennt.

Gemäß vorteilhaften Ausführungsformen kann ein zeitlicher Verlauf der mittleren Frequenz der Mikrosakkaden erfasst werden, wobei die mittlere Frequenz der Mikrosakkaden anhand mehrfacher Präsentation des ersten Gesichtsbilds mit Unterbrechungen ermittelt wird. In diesem Fall wird der Tatsache besonders gut Rechnung getragen, dass die Mikrosakkaden eine Frequenz in der Größenordnung von 1 Hz aufweisen, und dass die charakteristischen Merkmale in den Mikrosakkaden aber nach ca. 300-600 ms nach Beginn der Präsentation des Gesichtsbilds zu finden sind. Hier kann eine Mittelung einen erheblichen Vorteil mit sich bringen.

Gemäß vorteilhaften Ausführungsformen hierzu kann beziehungsweise können ein im mittleren zeitlichen Verlauf auftretendes erstes lokales Minimum der mittleren Frequenz und/oder ein im mittleren zeitlichen Verlauf auftretendes erstes lokales Maximum der mittleren Frequenz und/oder ein im mittleren zeitlichen Verlauf auftretendes zweites lokales Minimum der mittleren Frequenz erfasst werden und bei dem Analysieren genutzt werden.

Insbesondere können sich dieses erste lokale Minimum, das erste lokale Maximum und das zweite lokale Minimum im zeitlichen Verlauf hintereinander befinden, wobei sowohl Abstände auf der Zeitachse als auch auf der Frequenzachse charakteristische Eigenschaften zeigen können, je nachdem, welche Art von Gesichtsbild die Person betrachtet, ihr eigenes oder ein anderes, und auch, ob das andere gegebenenfalls das einer bekannten oder einer fremden Person ist.

Gemäß weiteren bevorzugten Ausführungsformen kann vorgesehen sein, dass die Mikrosakkadenrichtung und/oder ein Mikrosakkadenrichtungswechsel erfasst und bei dem Analysieren genutzt wird beziehungsweise werden.

Gemäß weiteren bevorzugten Ausführungsformen kann vorgesehen sein, dass die mittlere Mikrosakkadenbeschleunigung anhand mehrfacher Präsentation des ersten Gesichtsbilds mit Unterbrechungen erfasst und bei dem Analysieren genutzt wird. Auch diese Mikrosakkadenbeschleunigung hat unterschiedliche Werte, je nachdem, ob die Person ein Bild von sich selbst betrachtet ("Eigengesichtserkennung") oder das einer fremden Person.

Gemäß weiteren bevorzugten Ausführungsformen kann vorgesehen sein, dass die mittlere Mikrosakkadendauer anhand mehrfacher Präsentation des ersten Gesichtsbilds mit Unterbrechungen erfasst und bei dem Analysieren genutzt wird. Dadurch, dass die Mikrosakkaden nach Beginn der Präsentation in einem sehr kurzen Zeitraum prägnant auftreten, der im Vergleich zu der typischen Frequenz von 1 Hz für die Mikrosakkaden gering ist, kann bei Erfassung der Mikrosakkadendauer durchaus etwas beobachtet werden, das bei Erfassung der Mikrosakkadenfrequenz nicht beobachtet wird. Insofern kann die Erfassung der mittleren Mikrosakkadendauer ergänzend zu der Erfassung anderer Größen zu Mikrosakkaden hinzutreten.

Gemäß weiteren bevorzugten Ausführungsformen kann vorgesehen sein, dass der mittlere Zeitpunkt des Einsetzens der Mikrosakkadenbewegung anhand mehrfacher Präsentation des ersten Gesichtsbilds mit Unterbrechungen erfasst und bei dem Analysieren genutzt wird. Hier besteht nach Experimenten eine Grundtendenz darin, dass die Person bei einem vertrauten Gesicht, insbesondere bei ihrem eigenen, weniger Ausweichbewegungen zeigt, dass also der genannte Zeitpunkt des Einsetzens der Mikrosakkadenbewegung später liegt, als wenn die Person ein fremdes Bild betrachtet.

Gemäß vorteilhaften Ausführungsformen wird neben den Mikrosakkaden auch die Pupille beobachtet. Insbesondere kann dies so aussehen, dass zusätzlich ein Pupillendurchmesser und/oder eine Pupillendurchmesseränderung erfasst und bei dem Analysieren genutzt wird beziehungsweise werden. Solche Daten zum Pupillendurchmesser und/oder der Pupillendurchmesseränderung werden vorzugsweise in einem Zeitraum ab 200 ms nach und bis 3000 ms nach dem Beginn der Präsentation des Gesichtsbilds gewonnen, weiter vorzugsweise in einem Zeitraum ab 200 ms nach und bis 2000 ms nach dem Beginn der Präsentation des Gesichtsbilds gewonnen.

Durch das Erfassen schon vor dem Beginn der Präsentation des Gesichtsbilds kann ein Grundzustand, wie er sich etwa bei der Pupille durch die Lichtverhältnisse einstellt, ermittelt werden. Betrachtet die Person ihr eigenes Bild, ist die Pupille größer/bleibt größer, als wenn sie ein fremdes Bild betrachtet. Dies wird in dem genannten Zeitraum nach dem Beginn der Präsentation manifest.

Gemäß vorteilhaften Ausführungsformen kann vorgesehen sein, dass zum Zweck einer Authentifizierung der Person zusätzlich an zumindest einem Auge der Person das Irismuster, eine Irisverzerrung und/oder das Netzhautmuster erfasst wird beziehungsweise werden und/oder zusätzlich eine geometrische Anordnung von Elementen des Gesichts erfasst wird (Winkel zwischen Augen, Nase, Mund, Kinn und dergleichen Ähnlichem) und/oder zusätzlich Mimik erfasst wird. Allen diesen genannten Gegenständen ist gemeinsam, dass sie mit ein und derselben Erfassungsvorrichtung, nämlich typischerweise einer Kamera (an einem Eyetracker und dergleichen) gewonnen werden können, so dass es keiner zusätzlichen Sensorik bedarf, um diese Authentifizierung ergänzend anhand weiterer Gegenstände vorzunehmen.

Gemäß bevorzugten Ausführungsformen kann vorgesehen sein, dass beide Augen der zu prüfenden Person mithilfe eines Eyetrackers erfasst werden. Der Eyetracker sollte vorteilhafterweise eine Frequenz von zwischen 50 und 1000 Hz, etwa von 150 Hz, bei der Bildaufnahme verwenden, damit die Daten zu den Mikrosakkaden präzise erfasst werden können. Sinnvoll kann bei einem Eyetracker die Nutzung des Infrarotbereichs, also die Gewinnung von infraroten Aufnahmen, sein.

Gemäß vorteilhaften Ausführungsformen kann vorgesehen sein, dass das Gesichtsbild (das erste Gesichtsbild und auch gegebenenfalls das zumindest eine zweite Gesichtsbild) in einem Bereich von zwischen 5° und 15° Gesichtsfeld der zu prüfenden Person und/oder für eine Zeitdauer von zwischen 150 ms und 1 s präsentiert wird, etwa über einen Zeitraum von 300 ms hinweg. Diese Werte haben sich in Versuchen bewährt.

Die erfindungsgemäße Vorrichtung zum Authentifizieren einer Person umfasst:

- eine Einrichtung zum Präsentieren von Gesichtsbildern;

- einen Eyetracker, insbesondere mit einer Infrarotkamera, welche Infrarotaufnahmen mit einer Frequenz von zwischen 50 und 1000 Hz erzeugt, zum Aufnehmen einer zu prüfenden Person beim Betrachten der Gesichtsbilder;
- eine Auswerteeinrichtung, der von dem Eyetracker aufgenommene Bilder zuführbar sind und die ausgelegt ist, aus den Bildern Daten zu Mikrosakkaden der zu prüfenden Person zu extrahieren;
- eine Entscheidungseinrichtung, der durch die Einrichtung zum Präsentieren eine Information bereitstellbar ist, ob der zu prüfenden Person ein Gesichtsbild der zu authentifizierenden Person oder ein anderes Gesicht gezeigt wurde, und der die Daten von der Auswerteeinrichtung zuführbar sind,
- wobei die Entscheidungseinrichtung ausgelegt ist, anhand der Daten zu dem Gesichtsbild der zu authentifizierenden Person zu prüfen, ob die zu prüfende Person mit der zu authentifizierenden Person übereinstimmt.

Die Vorrichtung ermöglicht insbesondere die Durchführung des erfindungsgemäßen Verfahrens und stellt auf diese Weise die oben beschriebenen Vorteile bereit. Die oben genannten bevorzugten Ausführungsformen, die zum Verfahren beschrieben worden sind, können gleichermaßen auch bei der Vorrichtung Anwendung finden (Präsentieren von zweiten Gesichtsbildern, Erfassung von spezifischen Daten zu den Mikrosakkaden und/oder zur Pupille, ergänzende Daten zur Authentifizierung der Person, das genannte Gesichtsfeld und die genannte Zeitdauer).

Gemäß vorteilhaften Ausführungsformen kann die Entscheidungseinrichtung eine Einrichtung zum Maschinenlernen umfassen, wobei sie insbesondere als neuronales Netz ausgebildet sein kann oder ein solches beinhalten kann. (Eine solche Einrichtung zum Maschinenlernen kann mit Daten von Probanden gespeist werden, denen eben Gesichtsbilder von sich selbst und/oder von anderen Personen dargestellt werden, zusammen mit der Information, um welche Klasse von Bildern es sich handelt, Eigengesichtsbilder oder Gesichtsbilder von anderen Personen, letztere gegebenenfalls unterteilt nach bekannten Personen und fremden Personen.)

Gemäß vorteilhaften Ausführungsformen kann vorgesehen sein, dass die Vorrichtung ausgelegt ist, ein Videoidentverfahren durchzuführen. So kann die Vorrichtung an kritischen Infrastrukturstellen (Grenzübergänge, Passkontrolle am Flughafen) oder für spezielles Personal (insbesondere die Polizei) bereitgestellt werden. Gegebenenfalls müssen lediglich Smartphones oder kleinere tragbare Recheneinheiten, die neuerdings bereits mit Eyetrackern ausgestattet sind, lediglich mit einer entsprechenden Software (Anwendung, "App" oder Ähnlichem) ausgestattet werden.

Gemäß einer bevorzugten Ausführungsform kann vorgesehen sein, dass die Vorrichtung bei einer bargeldlosen Zahlung nutzbar ist. Hier kann es wesentlich sein, dass die Person, der der Zahlbetrag belastet werden soll, tatsächlich zuverlässig authentifiziert wird.

Die erfindungsgemäße Vorrichtung kann nach Ausführungsformen auch als Client bei einer Videokonferenz fungieren. Auch in solchen Videokonferenzen kann gegebenenfalls Geheimhaltungsbedürftiges besprochen werden, wozu eine Authentifizierung zuverlässig sein muss.

Gemäß vorteilhaften Ausführungsformen kann vorgesehen sein, dass die Vorrichtung zudem als Lügendetektor und/oder Detektor bezüglich Wissens der zu prüfenden Person zu dienen ausgelegt ist. Dies kann insbesondere bei der Gesichtserkennung von anderen Personen genutzt werden, um zu entscheiden, ob die andere Person der zu testenden Person bekannt ist oder nicht. Auch können gegebenenfalls andere Gegenstände, außer Gesichtern, dargestellt werden ("Tatwaffe im Mordfall" und Ähnliches).

Gemäß weiteren vorteilhaften Ausführungsformen der Erfindung ist die Vorrichtung als ein Personal Computer, als ein Klapprechner (Laptop), ein Smartphone, ein Tabletcomputer, als Headset für virtuelle Realität oder für erweiterte Realität ("Augmented Reality"), als eine Smartwatch oder ein sonstiges Wearable ausgebildet. In all diesen Fällen kann dies kompakt bereitgestellt werden und flexibel genutzt werden.

Die Einrichtung zum Maschinenlernen verwendet gemäß einer Ausführungsform ein herkömmliches Maschinenlernverfahren ("Machine Learning") und arbeitet mit statistischen Modellen ("Random Forest of Decision Trees", "Logistic regression"). Sie kann gemäß einer anderen Ausführungsform als neuronales Netz ausgebildet sein. Die Einrichtung ist trainiert mit Kombinationen von Daten zu Mikrosakkaden einer Person beim Betrachten eines Gesichtsbilds und Angaben dazu, ob dieses Gesichtsbild zu der Person selbst gehört oder zu einer anderen Person, wobei die Einrichtung dazu ausgelegt ist (als Ergebnis des Trainings), anhand von Daten zu Mikrosakkaden einer zu prüfenden Person anzugeben, ob die zu prüfende Person ihr eigenes Gesicht oder ein anderes Gesicht betrachtet hat.

Die genannten Daten zu Mikrosakkaden können die vorgenannten Daten beinhalten (zeitlicher Verlauf der mittleren Frequenz etc., Mikrosakkadenrichtung/Mikrosakkadenrichtungswechsel, Mikrosakkadenbeschleunigung, Mikrosakkadendauer, mittlerer Zeitpunkt des Einsetzens der Mikrosakkadenbewegung, oder auch Pupillendurchmesser, Pupillendurchmesseränderung).

Nachfolgend werden bevorzugte Ausführungsformen der Erfindung unter Bezug auf die Zeichnung näher beschrieben, in der

Fig. 1 schematisch den Aufbau einer Ausführungsform der erfindungsgemäßen Vorrichtung zum Authentifizieren einer Person veranschaulicht,

Fig. 2    den zeitlichen Verlauf des mittleren Pupillendurchmessers bei verschiedenen Klassen von dargestellten Gesichtern veranschaulicht,

Fig. 3    den mittleren zeitlichen Verlauf der mittleren Mikrosakkadenfrequenz (auch als "Mikrosakkadenrate" zu bezeichnen) für verschiedene Situationen veranschaulicht,

Fig. 4    den gemittelten Verlauf der Mikrosakkadenfrequenz ausgehend von dem Beginn der Darstellung eines Eigengesichtsbilds und daraus ableitbare Größen veranschaulicht,

Fig. 5    schematisch die Schritte eines Videoidentverfahrens als Beispiel für ein erfindungsgemäßes Verfahren veranschaulicht.

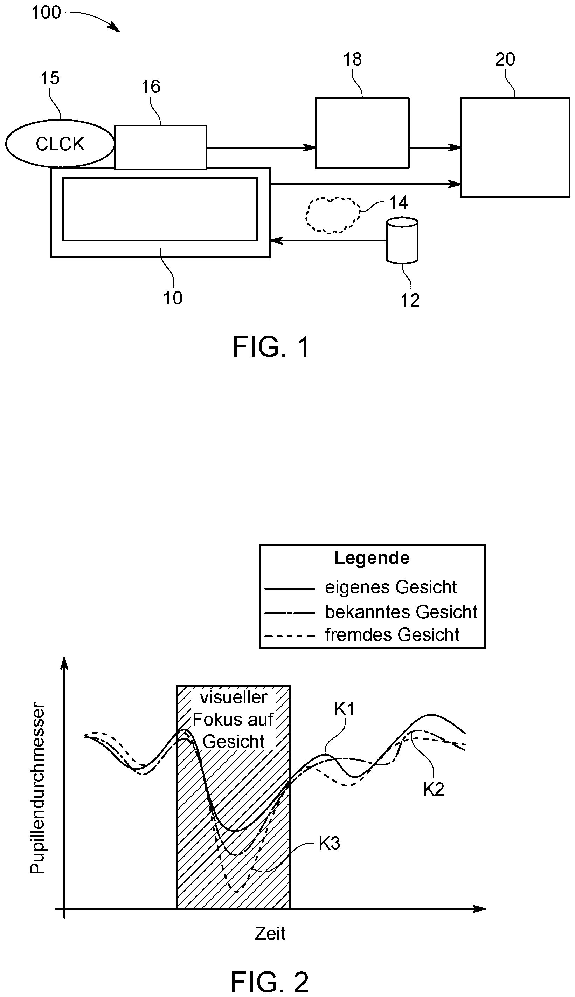

Eine in Fig. 1 gezeigte und dort im Ganzen mit 100 bezeichnete Vorrichtung zum Authentifizieren einer Person umfasst eine Einrichtung zum Präsentieren von Gesichtsbildern, nämlich vorliegend in Form eines Bildschirms 10, dem aus einer Datenbank 12 die Gesichtsbilder zuführbar sind, wobei die Datenbank 12 mit dem Bildschirm 10 bzw. einer internen Steuerungseinrichtung desselben, die in der Fig. 1 nicht gezeigt ist, gekoppelt ist. Die Datenbank 12 kann räumlich von dem Bildschirm 10 getrennt sein, so dass die Kopplung optional über das Internet 14 oder ein sonstiges Netzwerk erfolgt.

Das Anzeigen der Gesichtsbilder auf dem Bildschirm 10 erfolgt zeitgesteuert, wozu eine Clock ("Uhr") 15 vorhanden ist. Beim Betrachten der Gesichtsbilder wird eine in Fig. 1 nicht gezeigte Person vor dem Bildschirm mittels eines Eyetrackers 16 erfasst. Ein Eyetracker umfasst üblicherweise eine Infrarotkamera, wobei zur ausreichenden zeitlichen Auflösung diese mit einer Frequenz von zwischen 50 und 1000 Hz betrieben wird, etwa bei 150 Hz. Der Eyetracker 16 führt die Bilder einer Auswerteeinrichtung 18 zu, die Daten zu Mikrosakkaden bei der Person vor dem Bildschirm 10 extrahiert und die optional weitere physiologische Informationen gewinnt. Einer Entscheidungseinrichtung 20 werden die extrahierten Daten von der Auswerteeinrichtung 18 zugeführt. Dies wird gekoppelt mit der Information, bereitgestellt durch die Einrichtung zum Präsentieren von Gesichtsbildern, welches Gesichtsbild der Person angezeigt wird, klassifiziert nach der Information, ob es sich um ein Gesichtsbild der Person selbst handelt (die zu authentifizieren ist) oder um ein anderes Gesicht. Die Information "anderes Gesicht" kann optional unterschieden werden zwischen "bekanntes anderes Gesicht" und "fremdes anderes Gesicht". In der Entscheidungseinrichtung 20 wird anhand der zugeführten Daten und der Information geprüft, ob die zu prüfende Person, die sich vor dem Eyetracker 16 befindet, mit der zu authentifizierenden Person übereinstimmt. Dies gilt insbesondere dann, wenn der zu prüfenden Person ein Bild der zu authentifizierenden Person gezeigt wurde und die physiologische Reaktion, die mittels des Eyetrackers 16 erfasst wird, typisch für eine Eigengesichtserkennung ist.

Bereits an sich bekannt ist es, mittels des Eyetrackers 16 den Pupillendurchmesser der Person zu erfassen. Fig. 2 zeigt eine Darstellung des durchschnittlichen Pupillendurchmessers über die Zeit. Die Kurve K1 veranschaulicht eine physiologische Reaktion bezüglich des Pupillendurchmessers beim Betrachten des eigenen Gesichts, die Kurve K2 beim Betrachten eines anderen, aber bekannten Gesichts, und die Kurve K3 beim Betrachten eines fremden Gesichts. Hierbei entspricht dem unterlegten Bereich "visueller Fokus auf Gesicht" die zeitliche Darstellung des entsprechenden Gesichtsbilds. Es ist ersichtlich, dass sich bei Betrachten eines Gesichts der Pupillendurchmesser stets verringert und dass er aber beim eigenen Gesicht größer bleibt als bei einem anderen Gesicht, bei einem bekannten Gesicht größer bleibt als bei einem fremden Gesicht.

Eine vergleichbare Reaktion erhält man nun, wenn die Mikrosakkadenfrequenz, auch als "Mikrosakkadenrate" bezeichnet, über die Zeit ermittelt wird.

Die Mikrosakkadenfrequenz ist nicht ganz leicht zu ermitteln.

Mikrosakkaden sind von einer Person unfreiwillig gezeigte Änderungen im Blickwinkel innerhalb von 1° des Gesichtsfeldes. Ändert sich eine Darstellung, so gibt es im zeitlichen Übergang eine Änderung in der Mikrosakkadenfrequenz, insbesondere eine Verringerung.

Eine Mikrosakkade als solche kann anhand eines Geschwindigkeitsschwellwerts erkannt werden. Die Mikrosakkadenfrequenz kann abgeschätzt werden, indem nur das Einsetzen der Mikrosakkaden erfasst wird, abhängig vom Zeitpunkt der Änderung der Darstellung, also abhängig von dem Beginn des Präsentierens des Gesichtsfeldes im vorliegenden Fall. Diese Zeitpunkte des Einsetzens der Mikrosakkadenbewegung werden wiederholt gemessen, so dass man eine Folge mit den Messwerten {t1, t2, t3, ...} erhält. Die Mikrosakkadenrate oder -frequenz r(t) zum Zeitpunkt t wird geschätzt durch Nutzung der Formel:

$$r_{\mathrm{approx}}(t) = \int_{-\infty}^{+\infty} \mathrm{d}\tau\, w(\tau)\rho(t - \tau)$$

(1).

Hierin ist die sogenannte Mikrosakkade für Antwortfunktion $\rho(t)$ definiert als:

$$\rho(t) = \sum_{i=1}^{N} \delta(t - t_i) \qquad (2),$$

wobei $\delta(t)$ die Diracsche Delta-Funktion ist. Als Filter wird der folgende Kern verwendet:

$$w(\tau) = \left[ \alpha^2 \tau \exp(-\alpha \tau) \right]_+ \qquad (3),$$

wobei der Parameter $\alpha$ auf 1/30 gesetzt ist.

Die so erhaltene mittlere Mikrosakkadenfrequenz oder -rate r(t) lässt sich über die Zeit darstellen. Hier lässt sich nun unterscheiden, ob die Person ihr eigenes Gesicht oder ein anderes, insbesondere ein bekanntes oder fremdes Gesicht, betrachtet hat. Die Mikrosakkadenfrequenz wird durch die Veränderung im Gesichtsfeld unterdrückt. Die Erholung von der Unterdrückung der Mikrosakkaden wird verringert, wenn die Person ihr eigenes Gesicht betrachtet, siehe Kurve K4. Beim Betrachten eines bekannten anderen Gesichts bleibt die Mikrosakkadenfrequenz etwas verringert, gemäß Kurve K5. Bei Betrachten eines fremden Gesichts hingegen bleibt gemäß Kurve K6 die Mikrosakkadenrate zwar verringert, aber nicht im gleichen Ausmaße.

Die Auswerteeinrichtung 18 aus Fig. 1 soll in der Lage sein, diese Mikrosakkadenfrequenz gemäß den obigen Formeln zu ermitteln, bei wiederholtem Präsentieren der entsprechenden Gesichtsbilder, vor allem auch mehrfach des Eigengesichtsbilds. Dann lässt sich erkennen, ob die Person ihr eigenes Bild betrachtet oder nicht.

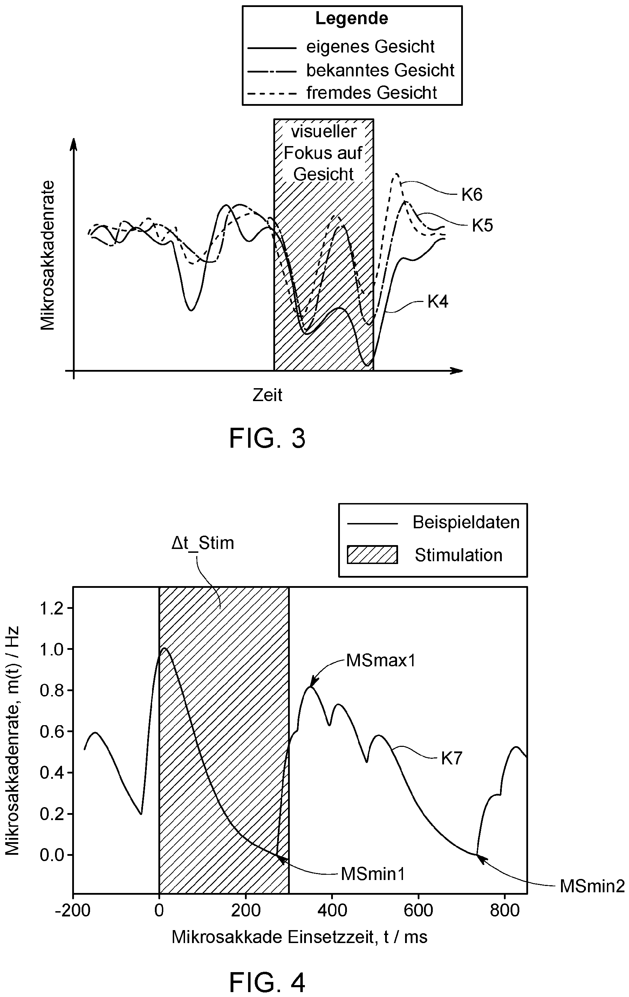

Gemäß Fig. 4 kann die Mikrosakkadenfrequenz aufgetragen werden über den Zeitpunkt des Einsetzens der Mikrosakkadenbewegung (Frequenz in Hz, Einsetzzeitpunkt in ms). Die hier gezeigte Kurve lässt sich wie folgt auswerten: Es lässt sich das erste lokale Minimum erfassen, das während des Darstellens des Eigenbildes (im Zeitraum $\Delta(t)\_Stim$) auftritt. Endet nun dieser Zeitraum $\Delta(t)\_Stim$. Dann folgt gemäß der Kurve K7 irgendwann ein weiteres lokales Minimum MSmin2. Sowohl die absoluten Werte für diese Minima und Maxima als auch die zeitlichen Abstände gemäß der x-Achse in Fig. 4 und die Frequenzabstände gemäß der y-Achse in Fig. 4 lassen sich charakteristisch zuordnen der Frage, ob die Person ihr eigenes Gesicht betrachtet oder nicht. Die Auswerteeinrichtung 18 ist entsprechend ausgelegt, diese Kurve K7 zu ermitteln und auszuwerten.

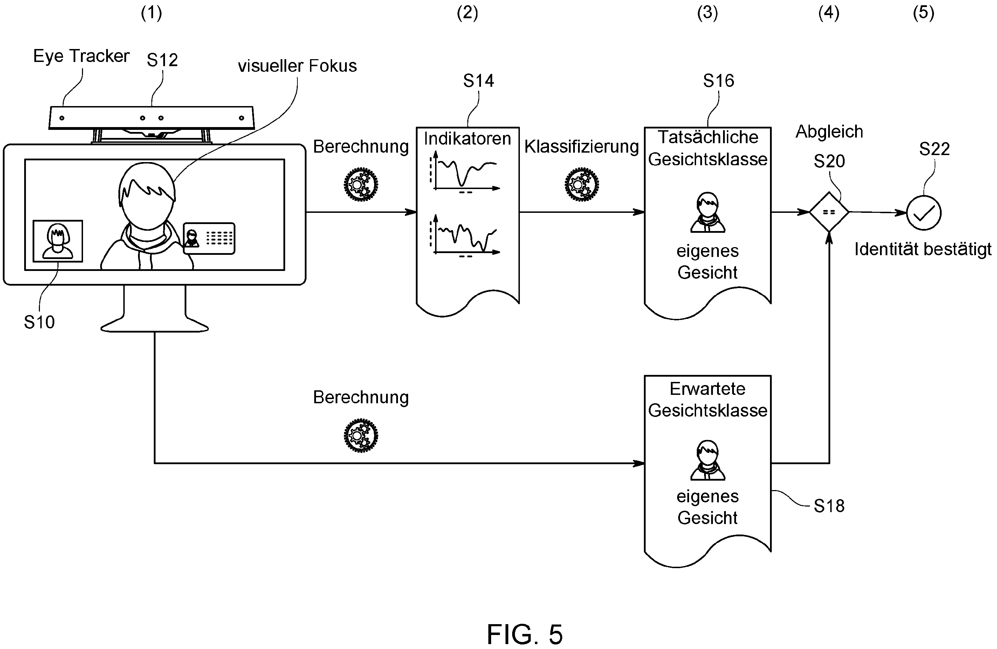

Abschließend soll anhand von Fig. 5 erläutert werden, wie ein Videoidentverfahren durchgeführt werden kann: Bei einem Videoidentverfahren muss sich eine Person vor einer Kamera so zeigen, dass eine Auswerteeinrichtung erkennt, dass es sich um die Person handelt, die zu authentifizieren ist.

In Schritt S10 wird entsprechend der Person ein Bild auf einem Bildschirm angezeigt. Es kann sich hierbei um ein Eigengesicht oder ein Fremdgesicht handeln. Mittels des Eyetrackers werden in Schritt S12 Daten zur an einem Auge der Person, vorzugsweise an beiden Augen der Person, auftretenden Mikrosakkaden erfasst. Die Schritte S10 und S12 können wiederholt werden, damit mehrfache Präsentationen des entsprechenden Gesichtsbilds erfolgen und entsprechende Daten abgeleitet werden können, insbesondere wie oben beschrieben die Mikrosakkadenrate. Die entsprechende Berechnung führt zum Auffinden von Indikatoren gemäß Schritt S14. Diese werden gemäß Schritt S16 klassifiziert daraufhin, ob die Person ihr eigenes Gesicht betrachtet oder ein fremdes Gesicht. Von der Einrichtung 10 zum Präsentieren her ist nun bekannt, welches Gesicht die Person tatsächlich betrachtet hat, Schritt S18, und es erfolgt in Schritt S20 ein Abgleich daraufhin, ob die erwartete Gesichtsklasse (eigenes Gesicht und anderes Gesicht, letzteres gegebenenfalls differenziert zwischen bekanntem anderen und fremdem anderen Gesicht) mit der tatsächlich in Schritt S16 ermittelten Gesichtsklasse übereinstimmt. Ist dies der Fall, ist in Schritt S22 die Identität bestätigt. Ist dies nicht der Fall, geht das Videoidentverfahren negativ aus oder es können gegebenenfalls nochmals mehrere Schritte wiederholt werden.

Die Erfindung ermöglicht eine multimodale Gesichtsbiometrie. Insbesondere können neben den Mikrosakkaden weitere physiologische Parameter erfasst werden, neben Pupillendurchmesser und Pupillendurchmesseränderung auch ein Irismuster, eine Irisverzerrung (Letztere auftretend bei Änderung des dargestellten Bildes), Netzhautmuster, geometrische Anordnung von Elementen des Gesichts und/oder Mimik.

Bezugszeichenliste

| 10 | Bildschirm |
| 12 | Datenbank |
| 14 | Internet |
| 15 | Clock |
| 16 | Eyetracker |
| 18 | Auswerteeinrichtung |
| 20 | Entscheidungseinrichtung |
| 100 | Vorrichtung |

| K1, K2, K3, K4, K5, K6, K7 | Kurven |
| S10, S12, S14, S16, S18, S20, S22 | Schritte einer Ausführungsform des erfindungsgemäßen Verfahrens |

**Patentansprüche**

1. Verfahren zum Detektieren einer Eigengesichtserkennung bei einer Person, insbesondere zum Zweck einer Authentifizierung der Person, mit:

   - Präsentieren eines ersten Gesichtsbilds gegenüber der Person;
   - Erfassen von Daten zu den bei dem Betrachten des Gesichtsbilds an zumindest einem Auge der Person auftretenden Mikrosakkaden;
   - Analysieren, ob die Daten zu Mikrosakkaden auf Eigengesichtserkennung durch die Person schließen lassen, und
   - Bereitstellen einer Ausgabe eines Ergebnisses der Analyse.

2. Verfahren nach Anspruch 1, mit:

   - Präsentieren auch zumindest eines zweiten, eine andere Person zeigenden Gesichtsbilds gegenüber der Person;
   - Erfassen von Daten zu den bei dem Betrachten des zumindest einen zweiten Gesichtsbilds an zumindest einem Auge der Person auftretenden Mikrosakkaden;
   - Nutzen eines Vergleichs der Daten zu Mikrosakkaden bei Betrachten des ersten Gesichtsbilds zu den Daten zu Mikrosakkaden bei Betrachten des zumindest einen zweiten Gesichtsbilds zum Detektieren der Eigengesichtserkennung, und bei dem zumindest eines der zweiten Gesichtsbilder eine der Person bekannte andere Person zeigt und zumindest eines der zweiten Gesichtsbilder eine der Person nicht bekannte andere Person zeigt.

3. Verfahren nach einem der vorhergehenden Ansprüche, bei dem ein zeitlicher Verlauf der mittleren Frequenz der Mikrosakkaden erfasst wird, wobei die mittlere Frequenz der Mikrosakkaden anhand mehrfacher Präsentation des ersten Gesichtsbilds mit Unterbrechungen ermittelt wird, und bei dem ein im mittleren zeitlichen Verlauf auftretendes erstes lokales Minimum der mittleren Frequenz und/oder ein im mittleren zeitlichen Verlauf auftretendes erstes lokales Maximum der mittleren Frequenz und/oder ein im mittleren zeitlichen Verlauf auftretendes zweites lokales Minimum der mittleren Frequenz erfasst wird und bei dem Analysieren genutzt wird beziehungsweise werden.

4. Verfahren nach einem der vorhergehenden Ansprüche, bei dem eine Mikrosakkadenrichtung und/oder ein Mikrosakkadenrichtungswechsel erfasst und bei dem Analysieren genutzt wird beziehungsweise werden.

5. Verfahren nach einem der vorhergehenden Ansprüche, bei dem eine mittlere Mikrosakkadenbeschleunigung anhand mehrfacher Präsentation des ersten Gesichtsbilds mit Unterbrechungen erfasst und bei dem Analysieren genutzt wird, und/oder bei dem eine mittlere Mikrosakkadendauer anhand mehrfacher Präsentation des ersten Gesichtsbilds mit Unterbrechungen erfasst und bei dem Analysieren genutzt wird, und/oder bei dem ein mittlerer Zeitpunkt des Einsetzens der Mikrosakkadenbewegung anhand mehrfacher Präsentation des ersten Gesichtsbilds mit Unterbrechungen erfasst und bei dem Analysieren genutzt wird.

6. Verfahren nach einem der vorhergehenden Ansprüche, bei dem zusätzlich ein Pupillendurchmesser und/oder eine Pupillendurchmesseränderung erfasst und bei dem Analysieren genutzt wird beziehungsweise werden, wobei vorzugsweise Daten zum Pupillendurchmesser und/oder der Pupillendurchmesseränderung in einem Zeitraum ab 100 ms und bis 3000 ms nach dem Beginn der Präsentation des Gesichtsbilds gewonnen werden, weiter vorzugsweise in einem Zeitraum ab 200 ms und bis 2000 ms nach dem Beginn der Präsentation des Gesichtsbilds gewonnen werden.

7. Verfahren nach einem der vorhergehenden Ansprüche, bei dem zum Zweck einer Authentifizierung der Person zusätzlich an zumindest einem Auge der Person das Irismuster, eine Irisverzerrung und/oder das Netzhautmuster erfasst wird beziehungsweise werden und/oder zusätzlich eine geometrische Anordnung von Elementen des Gesichts erfasst wird und/oder zusätzlich Mimik erfasst wird, und/oder bei dem beide Augen der zu prüfenden Person mithilfe eines Eyetrackers erfasst werden, der Infrarotaufnahmen mit einer Frequenz von zwischen 50 und 1000 Hz erzeugt, und/oder bei dem das Gesichtsbild in einem Bereich von zwischen 5° und 15° Gesichtsfeld der zu prüfenden Person und/oder für eine Zeitdauer von zwischen 150 ms und 1 s präsentiert wird.

8. Vorrichtung (100) zum Authentifizieren einer Person, mit:

   - einer Einrichtung (10, 12) zum Präsentieren von Gesichtsbildern;
   - einem Eyetracker (16), insbesondere mit einer Infrarotkamera, welche Infrarotaufnahmen mit einer Frequenz von zwischen 50 und 1000 Hz erzeugt, zum Aufnehmen einer zu prüfenden Person beim Betrachten der Gesichtsbilder;
   - einer Auswerteeinrichtung (18), der von dem Eyetracker (16) aufgenommene Bilder zuführbar sind und die ausgelegt ist, aus den Bildern Daten zu Mikrosakkaden der zu prüfenden Person zu extrahieren;
   - einer Entscheidungseinrichtung (20), der durch die Einrichtung zum Präsentieren (10) eine Information bereitstellbar ist, ob der zu prüfenden Person ein Gesichtsbild der zu authentifizierenden Person oder ein anderes Gesicht gezeigt wurde, und der die Daten von der Auswerteeinrichtung (18) zuführbar sind,
   - wobei die Entscheidungseinrichtung (20) ausgelegt ist, anhand der Daten zu dem Gesichtsbild der zu authentifizierenden Person zu prüfen, ob die zu prüfende Person mit der zu authentifizierenden Person übereinstimmt.

9. Vorrichtung (100) nach Anspruch 8, **dadurch gekennzeichnet, dass** die Entscheidungseinrichtung (20) eine Einrichtung zum Maschinenlernen umfasst, insbesondere ein neuronales Netz.

10. Vorrichtung (100) nach Anspruch 8 oder 9, die ausgelegt ist, ein Videoidentverfahren durchzuführen.

11. Vorrichtung (100) nach einem der Ansprüche 8 bis 10, die bei einer bargeldlosen Zahlung nutzbar ist.

12. Vorrichtung (100) nach einem der Ansprüche 8 bis 11, die als Client bei einer Videokonferenz fungiert.

13. Vorrichtung (100) nach einem der Ansprüche 8 bis 12, die ausgelegt ist, zudem als Lügendetektor und/oder Detektor bezüglich Wissens der zu prüfenden Person zu dienen.

14. Vorrichtung (100) nach einem der Ansprüche 8 bis 13, ausgebildet als ein Personal Computer, ein Klapprechner, ein Smartphone, ein Tabletcomputer, als Headset für virtuelle Realität oder für erweiterte Realität, eine Smartwatch oder ein sonstiges Wearable.

15. Einrichtung (20) zum Maschinenlernen, insbesondere neuronales Netz, die trainiert ist mit Kombinationen von Daten zu Mikrosakkaden einer Person beim Betrachten eines Gesichtsbilds und Angaben dazu, ob dieses Gesichtsbild zu der Person selbst gehört oder zu einer anderen Person, wobei die Einrichtung dazu ausgelegt ist, anhand von Daten zu Mikrosakkaden einer zu prüfenden Person anzugeben, ob die zu prüfende Person ihr eigenes Gesicht oder ein anderes Gesicht betrachtet hat.

FIG. 1

Legende

———— eigenes Gesicht
—·—·— bekanntes Gesicht
------ fremdes Gesicht

FIG. 2

**Legende**

| | |
|---|---|
| ——— | eigenes Gesicht |
| —·— | bekanntes Gesicht |
| - - - - | fremdes Gesicht |

visueller
Fokus auf
Gesicht

Mikrosakkadenrate

K6

K5

K4

Zeit

## FIG. 3

| | |
|---|---|
| ——— | Beispieldaten |
| ▨ | Stimulation |

Δt_Stim

MSmax1

K7

MSmin1

MSmin2

Mikrosakkadenrate, m(t) / Hz

1.2

1.0

0.8

0.6

0.4

0.2

0.0

-200    0    200    400    600    800

Mikrosakkade Einsetzzeit, t / ms

## FIG. 4

FIG. 5

EP 4 528 682 A1

## EUROPÄISCHER RECHERCHENBERICHT

**Nummer der Anmeldung**

EP 24 20 2323

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | LISA SCHWETLICK ET AL: "Self-recognition generates characteristic responses in pupil dynamics and microsaccade rate", ARXIV.ORG, CORNELL UNIVERSITY LIBRARY, 201 OLIN LIBRARY CORNELL UNIVERSITY ITHACA, NY 14853, 28. Juli 2023 (2023-07-28), XP091576130, * Zusammenfassung * * Seite 5, Zeile 20 - Zeile 29 * * Seite 6, Zeile 12 - Zeile 15 * * Seite 8, Zeile 7 - Zeile 8 * * Seite 14, Zeile 1 - Zeile 9 * * Seite 14, Zeile 34 - Zeile 36 * * Seite 17, Zeile 17 - Zeile 19 * * Abbildungen 2, 4 * * Unterschrift zu Abbildung 4 * ----- | 1-15 | INV. G06V40/16 G06V40/19 G06V40/18 |
| T | Anonymous: "EyeLink-1000-Plus-Brochure-2016-November. pdf", , 8. März 2021 (2021-03-08), Seiten 1-11, XP093244116, Gefunden im Internet: URL:https://web.archive.org/web/2021030819 1525/https://www.sr-research.com/wp-conten t/uploads/2017/07/EyeLink-1000-Plus-Brochu re-2016-November.pdf [gefunden am 2025-01-28] * Seite 2, Spalte 1, Reihe 2 * ----- | | |

**RECHERCHIERTE SACHGEBIETE (IPC)**

G06V

Der vorliegende Recherchenbericht wurde für alle Patentansprüche erstellt

| Recherchenort | Abschlußdatum der Recherche | Prüfer |
|---|---|---|
| Den Haag | 31. Januar 2025 | De Coi, Juri |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

\.....................................................................................

& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020109284 A1
- DE 102020109285 A1
- DE 102020109286 A1

**In der Beschreibung aufgeführte Nicht-Patentliteratur**

- **LISA SCHWETLICK et al.** *Self-recognition generates characteristic responses in pupil dynamics and microsaccade rate*